# FASCICULE DE BREVET EUROPEEN

(11) **EP 1 795 096 B1**
(45) Date de publication et mention de la délivrance du brevet: **03.06.2009**
(21) Numéro de dépôt: 06291836.2
(22) Date de dépôt: 29.11.2006
(51) Int. Cl.: A47J 37/06

(54) **Dispositif de cuisson**
Gargerät
Cooking device

(30) Priorité: 30.11.2005 FR 0512179
(43) Date de publication de la demande: 13.06.2007
(73) Titulaire: SEB SA, 69130 Ecully (FR)
(72) Inventeur: Besson, Jean-Christophe, 74600 Seynod (FR); Dauvergne, Francois, 74600 Seynod (FR); Simond, Thierry, 73360 Saint Pierre de Genebroz (FR)
(74) Mandataire: Pichat, Thierry

(56) Documents cités:
- EP-A- 1 486 152
- FR-A- 1 025 704
- FR-A- 2 813 178
- US-A- 3 527 154
- US-B1- 6 268 592

## Description

La présente invention concerne un dispositif de cuisson du type adapté à être utilisé sur une table, par exemple un barbecue électrique de table ou d'intérieur, tel que connu par le document EP 1 486 152.

On connaît un tel dispositif de cuisson du type comprenant une base dans laquelle est réalisée un ouverture, une surface de cuisson adaptée à recevoir un aliment à cuire et supportée par la base au niveau de l'ouverture, et une cavité adaptée à recevoir des sauces.

Cependant, dans un tel dispositif, la cavité, destinée à récupérer les graisses de cuisson, est réalisée dans ou portée directement par la surface de cuisson à un niveau permettant l'écoulement naturel des graisses de la surface jusqu'à la cavité. La configuration et la disposition de la cavité par rapport à la surface de cuisson et à l'ouverture limitent son utilisation en tant que récupérateur de graisses.

L'invention vise à intégrer une fonctionnalité nouvelle à un appareil de cuisson du type précité.

Selon l'invention, dans l'appareil du type précité, la cavité est portée par la base à la périphérie de l'ouverture.

Ainsi, la cavité qui se trouve alors sans contact avec la surface de cuisson, peut être utilisée comme récipient contenant un assaisonnement liquide à répandre sur l'aliment en cours de cuisson ou comme réceptacle suffisamment profond pour accueillir de manière efficace des ustensiles de cuisson permettant la manipulation de l'aliment tels qu'une pince, une spatule, un couteau ou des ciseaux.

D'autres particularités et avantages de la présente invention apparaîtront dans la description d'un mode de réalisation donné à titre d'exemple non limitatif et illustré par les dessins mis en annexe dans lesquels :
La figure 1 est une vue de dessus en perspective éclatée d'un appareil de cuisson conforme au mode de réalisation de la présente invention,
La figure 2 est une vue similaire à la figure 1, les éléments constitutifs de l'appareil étant assemblés,
La figure 3 est une vue de dessus de l'appareil de cuisson de la figure 1, et
La figure 4 est une vue en coupe du même appareil de cuisson selon la ligne IV-IV de la figure 3.

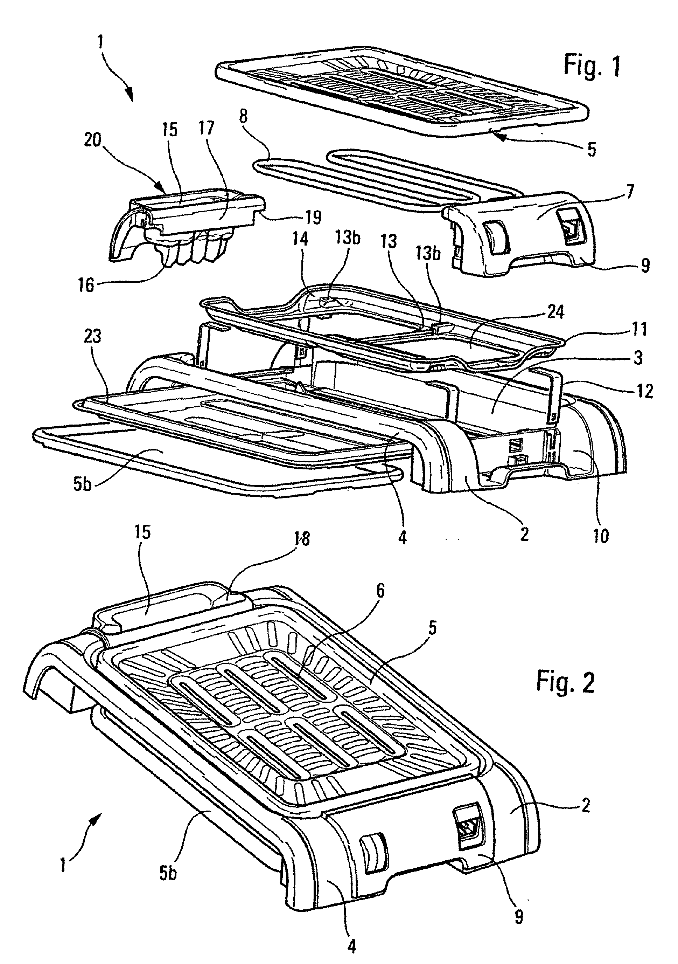

Comme on peut le voir aux figures 1 à 4, un dispositif de cuisson 1 (tel qu'un barbecue ou un grill de table) comprend une base 2 qui forme le corps principal de l'appareil 1 et dans laquelle est réalisée une ouverture 3. L'ouverture 3 est ainsi délimitée par des parois latérales 4 de la base 2. Dans le présent mode de réalisation, les parois latérales 4 (comme le reste de la base 2) sont réalisées en une matière thermoplastique.

Le dispositif de cuisson 1 comprend également une surface de cuisson 5 adapté à recevoir un aliment à cuire. La surface de cuisson 5 est supportée par la base 2 au niveau de l'ouverture 3. Dans le présent mode de réalisation, la surface de cuisson 5 est formée par une plaque de cuisson comportant des orifices d'écoulement 6 des jus de cuisson.

Le dispositif de cuisson 1 comprend aussi un sous-ensemble chauffant 7 qui est adapté à transmettre la chaleur de cuisson à la surface de cuisson 5. Dans le présent mode de réalisation, le sous-ensemble chauffant 7, séparable de la base 2, comprend une résistance électrique de chauffe 8 et un boîtier de connexion 9 comprenant les différents organes de régulation électrique. Le sous-ensemble chauffant 7 est disposé dans la base 2 de sorte que la résistance électrique de chauffe 8 s'étende sous la surface de cuisson 5, entre les orifices d'écoulement. Le boîtier de connexion 9 est logé dans un logement 10 réalisé dans la base 2, à la périphérie de l'ouverture 3.

Le dispositif de cuisson 1 comprend en outre un réflecteur thermique 11 qui est adapté à protéger les parois latérales 4 de la base 2 en matière plastique du rayonnement thermique émis par la résistance électrique de chauffe 8. Par ailleurs, afin de limiter le transfert de chaleur vers la base 2, le réflecteur thermique 11 est supportée par la base 2, par l'intermédiaire d'intercalaires 12 réalisés en une matière supportant la chaleur. Dans le présent mode de réalisation, le réflecteur thermique 11 comprend une paroi de fond 13 qui s'étend horizontalement sous la résistance électrique de chauffe 8 et des parois latérales 14 qui s'étendent verticalement le long des parois latérales 4 de la base 2 depuis la paroi de fond 13 jusqu'à la surface de cuisson 5 qui y repose. Ainsi, dans le présent mode de réalisation, le réflecteur thermique 11, par ses parois latérales 14, supporte la surface de cuisson 5, et, par sa paroi de fond 13 qui comprend des éléments saillants 13b, supporte la résistance électrique de chauffe 8.

Selon l'invention, le dispositif de cuisson 1 comprend une cavité 15 qui est adaptée à recevoir un liquide. Cette cavité 15 est portée par la base 2 et est disposée à la périphérie de l'ouverture 3. Dans le présent mode de réalisation, la cavité 15 est suffisamment profonde pour pouvoir accueillir de manière efficace des ustensiles de cuisson comme une pince, une spatule, un couteau ou une paire de ciseaux. De plus, dans le présent mode de réalisation, la cavité 15 est délimitée par une paroi de fond 16 et des parois latérales 17 qui sont pleines et permettent d'accueillir des assaisonnements pour les aliments en cours de cuisson. La cavité 15 ajoute ainsi une fonctionnalité supplémentaire à l'appareil de cuisson 1. Contrairement aux appareils de cuisson de l'art antérieur, ici, la cavité 15 n'est pas au contact de la surface de cuisson 5.

Par ailleurs, la cavité 15 est prolongée par au moins une rainure 18 (ici deux rainures 18) qui est adaptée à recevoir de façon stable, un rebord d'un couvercle dans une position de service dans laquelle le couvercle est dans une position sensiblement verticale, le couvercle étant par ailleurs adapté, quand il est dans sa position d'utilisation, à recouvrir une surface de cuisson qui comprend des parois latérales. De ce fait, la cavité 15 offre également une nouvelle fonctionnalité qui est de libérer les deux mains de l'utilisateur pour qu'il puisse manipuler aisément les aliments en cours de cuisson.

Dans le présent mode de réalisation, les rainures 18 s'étendent de chaque côté de la cavité 15 le long de la paroi latérale 17 de cette dernière qui s'étend le long de l'ouverture 3. De plus, les rainures 18 sont délimitées par une paroi de fond 19 qui est située au-dessus de la paroi de fond 16 de la cavité 15.

Dans le présent mode de réalisation, la cavité 15 est portée par un godet 20 qui est amovible de la base 2, ce qui rend le nettoyage de la cavité 15 particulièrement aisée : le godet 20, une fois séparée de la base 2 peut être nettoyé à grandes eaux, par exemple au lave-vaisselle. Afin de permettre un bon positionnement sûr et stable du godet 20 sur la base 2, celle-ci comprend un orifice 21 dans laquelle le godet 20 est disposé et dont la section de passage correspond à une section droite du godet 20 qui est définie par ses parois latérales 17. De plus, afin de définir l'enfoncement du godet 20, ses parois latérales sont prolongées par un rebord 22 qui prend appui sur le pourtour de l'orifice 21. Dans le présent mode de réalisation, le godet 20 est réalisé en une matière thermoplastique.

Dans le présent mode de réalisation, l'orifice 21 (et donc le godet 20 ainsi que la cavité 15) est réalisé, par rapport à l'ouverture 3, à l'opposé du logement 10 du boîtier de connexion 9.

En outre, dans le présent mode de réalisation, la cavité 15 n'est séparée de l'ouverture 3 que par des parois latérales 17 portées par le godet 20 (en l'occurrence, la séparation entre la cavité 15 et l'ouverture 3 par le seul godet 20 ne concerne qu'une seule paroi latérale 17, et ici, sur l'ensemble de la longueur de cette paroi). De ce fait, le réflecteur thermique 11 protège également la paroi latérale 17 en matière plastique du godet 20 du rayonnement thermique émis par la résistance électrique de chauffe 8, cette paroi latérale 17 faisant également office de paroi latérale 4 de l'ouverture 3.

Par ailleurs, dans le présent mode de réalisation, l'appareil de cuisson comprend une cuve 23 qui est portée par la base 2 et qui s'étend sous le réflecteur 11. Cette cuve 23 est adaptée à contenir de l'eau quand l'appareil de cuisson 1 est en configuration d'utilisation et reçoit les jus de cuisson qui s'écoulent au travers de passages 24 réalisés dans la paroi de fond 13 du réflecteur 11. En outre, les parois latérales 25 de la cuve 23 ne s'étendent pas jusqu'à la paroi de fond 13 du réflecteur 11 de façon à permettre sa sortie hors de la base 2 par coulissement le long de deux guides 26.

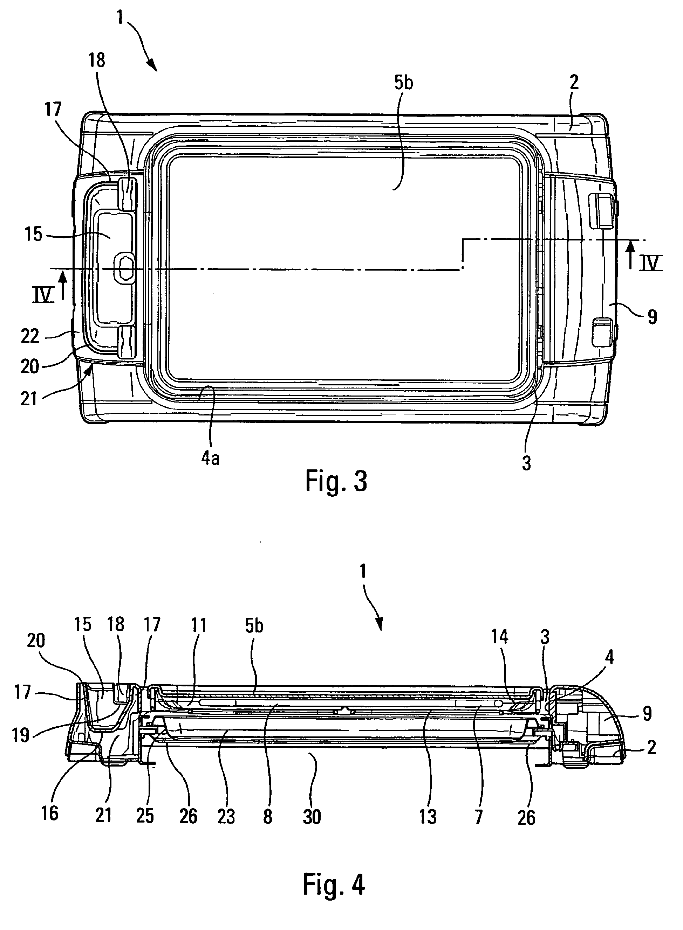

Dans le présent mode de réalisation, l'appareil de cuisson comprend une première plaque de cuisson 5 ayant des orifices d'écoulement 6 (type plaque pour grille-viande) et représentée disposée sur le réflecteur aux figures 1 et 2, et une seconde plaque de cuisson 5b à fond lisse représentée rangée dans un espace de rangement 30 qui est situé sous la cuve 23 aux figures 1 et 2 et représentée disposée sur le réflecteur aux figures 3 et 4.

## Revendications

1. Dispositif de cuisson (1) adapté à être posé sur une table, comprenant une base (2), une surface de cuisson (5) adaptée à recevoir un aliment à cuire supportée par la base (2), et une cavité (15) comprenant une paroi de fond (16) et des parois latérales (17), adaptée à recevoir des éléments utilisés pour la cuisson de l'aliment, et portée par un godet (20) amovible de la base (2), **caractérisé en ce que** dans la base (2) sont réalisés, d'une part, une ouverture (3) au niveau de laquelle la surface de cuisson (5) est supportée par la base (2), et, d'autre part, un orifice (21) dans lequel le godet (20) est disposé de sorte que la cavité (15) soit supportée par la base (2) à la périphérie de l'ouverture (3), le godet (20) comprenant un rebord (22) prolongeant ses parois latérales (17) et prenant appui sur le pourtour de l'orifice (21).

2. Dispositif de cuisson (1) selon la revendication 1, **caractérisé en ce que** la section de passage de l'orifice (21) correspond à une section droite du godet (20) de façon à définir une position stable d'utilisation de ce dernier.

3. Dispositif de cuisson (1) selon la revendication 1 ou 2, **caractérisé en ce que,** par endroit, la cavité (15) n'est séparée de l'ouverture (3) que par des parois latérales (17) portées par le godet (20).

4. Dispositif de cuisson (1) selon l'une des revendications 1 à 3, **caractérisé en ce qu'**il comprend un sous-ensemble chauffant (7) adapté à transmettre la chaleur de cuisson à la surface de cuisson (5), comportant un boîtier de connexion (9) logé dans un logement (10) réalisé dans la base (2), à la périphérie de l'ouverture (3) et à l'opposé de la cavité (15) par rapport à l'ouverture (3).

5. Dispositif de cuisson (1) selon la revendication 3 ou 4 dépendante de la revendication 3, **caractérisé en ce qu'**il comprend un réflecteur thermique (11) adapté à protéger du rayonnement thermique émis par une résistance électrique de chauffe (8) les parois latérales (17) du godet (20) en matière thermoplastique qui séparent l'ouverture (3) de la cavité (15).

6. Dispositif de cuisson (1) selon la revendication 5, **caractérisé en ce que** le réflecteur thermique (11) comprend des parois latérales (14) qui s'étendent depuis un niveau situé sous la résistance électrique de chauffe (8) jusqu'à la surface de cuisson (5) qui y repose.

7. Dispositif de cuisson (1) selon l'une des revendications 1 à 6, **caractérisé en ce que** la cavité (15) est prolongée par au moins une rainure (18) adaptée à recevoir de façon stable, dans une position de service, un rebord d'un couvercle qui est adapté à recouvrir la surface de cuisson (5) quand il est dans sa position d'utilisation.

8. Dispositif de cuisson (1) selon la revendication 7, **caractérisé en ce que** la paroi de fond (19) de chaque rainure (18) est située au-dessus de la paroi de fond (16) de la cavité (15).

## Claims

1. Cooking device (1) suitable for placing on a table, comprising a base (2), a cooking surface (5) suitable for receiving food to be cooked and supported by the base (2), and a cavity (15) comprising a bottom wall (16) and side walls (17), the cavity being suitable for receiving objects used for cooking the food, and being supported by a trough (20) that can be removed from the base (2), said device (1) being **characterized in that** there are formed in the base (2), on the one hand an opening (3) in which the cooking surface (5) is supported by the base (2), and on the other hand an orifice (21) in which the trough (20) is placed so that the cavity (15) is supported by the base (2) at the edge of the opening (3), the trough (20) comprising a lip (22) projecting from its side walls (17) and resting on the perimeter of the orifice (21).

2. Cooking device (1) according to Claim 1, **characterized in that** the inlet of the orifice (21) corresponds to a right cross section through the trough (20) to define a stable position of use of the latter.

3. Cooking device (1) according to Claim 1 or 2, **characterized in that,** in places, the cavity (15) is not separated from the opening (3) except by side walls (17) supported by the trough (20).

4. Cooking device (1) according to one of Claims 1 to 3, **characterized in that** it comprises a heating subassembly (7) suitable for transmitting cooking heat to the cooking surface (5), comprising a connection casing (9) housed in a housing (10) formed in the base (2), at the edge of the opening (3) and on the opposite side of the opening (3) from the cavity (15).

5. Cooking device (1) according to Claim 3 or according to Claim 4 as dependent on Claim 3, **characterized in that** it comprises a heat reflector (11) suitable for protecting from the heat radiation emitted by an electrical heating resistor (8) the thermoplastic side walls (17) of the trough (20) which separate the opening (3) from the cavity (15).

6. Cooking device (1) according to Claim 5, **characterized in that** the heat reflector (11) comprises side walls (14) extending from a level situated beneath the electrical heating resistor (8) to the cooking surface (5) which rests thereon.

7. Cooking device (1) according to one of Claims 1 to 6, **characterized in that t**he cavity (15) is extended by at least one groove (18) suitable for receiving in a stable manner, in a service position, a lip of a lid suitable for covering the cooking surface (5) when said lid is in its use position.

8. Cooking device (1) according to Claim 7, **characterized in that** the bottom wall (19) of each groove (18) is situated above the bottom wall (16) of the cavity (15).

## Patentansprüche

1. Gargerät (1) zur Aufstellung auf einem Tisch, mit einer Basis (2), einer auf der Basis (2) abgestützten Garfläche (5), die ein zu garendes Lebensmittel aufnehmen kann, und eine Vertiefung (15) mit einer Bodenwand (16) und Seitenwänden (17), der für das Garen des Lebensmittels verwendete Elemente aufnehmen kann, und der durch einen von der Basis (2) abnehmbaren Napf (20) gebildet wird, **dadurch gekennzeichnet, dass** in der Basis (2) ausgebildet sind, einerseits eine Öffnung (3), in welcher die Garfläche (5) durch die Basis (2) abgestützt ist, und andererseits eine Öffnung (21), in welcher der Napf (20) derart angeordnet ist, dass die Vertiefung (15) durch die Basis (2) am Umfang der Öffnung (3) abgestützt ist, wobei der Napf (20) einen Rand (22) aufweist, dessen Seitenwände (17) verlängert und an dem äußeren Umfang der Öffnung (21) anliegen.

2. Gargerät (1) nach Anspruch 1, **dadurch gekennzeichnet, dass** die Durchgangsweite der Öffnung (21) einem Querschnitt des Napfes (20) entspricht, um so eine stabile Nutzungsposition desselben zu bilden.

3. Gargerät (1) nach Anspruch 1 oder 2, **dadurch gekennzeichnet, dass** die Vertiefung (15) stellenweise nur durch die von dem Napf (20) getragenen Seitenwände (17) von der Öffnung (3) getrennt ist.

4. Gargerät (1) nach einem der Ansprüche 1 bis 3, **dadurch gekennzeichnet, dass** dieses eine Heizeinrichtung (7) umfasst, welche die Garhitze auf die Garfläche (5) übertragen kann und ein Anschlussgehäuse (9) umfasst, das in einer Aufnahme (10) sitzt, welche in der Basis (2) am Umfang der Öffnung (3) und gegenüber der Vertiefung (15) in Bezug zur Öffnung (3) ausgebildet ist.

5. Gargerät (1) nach Anspruch 3 oder 4, abhängig von Anspruch 3, **dadurch gekennzeichnet, dass** dieses einen Wärmereflektor (11) umfasst, der so ausgebildet ist, dass die Seitenwände (17) des Napfes (20) aus thermoplastischem Material, welche die Öffnung (3) von der Vertiefung (15) trennen, vor einer durch einen elektrischen Heizwiderstand (8) abgegebenen Wärmestrahlung schützt.

6. Gargerät (1) nach Anspruch 5, **dadurch gekennzeichnet, dass** der Wärmereflektor (11) Seitenwände (14) umfasst, die sich von einem unter dem elektrischen Heizwiderstand (8) liegenden Niveau bis zur Garfläche (5) erstrecken, die sich darauf abstützt.

7. Gargerät (1) nach einem der Ansprüche 1 bis 6, **dadurch gekennzeichnet, dass** die Vertiefung (15) durch eine Rinne (18) verlängert ist, die so ausgebildet ist, dass diese in stabiler Weise in einer Arbeitsposition einen Rand eines Deckels aufnehmen kann, der so ausgebildet ist, dass dieser die Garfläche (5) abdeckt, wenn sich diese in ihrer Betriebsposition befindet.

8. Gargerät (1) nach Anspruch 7, **dadurch gekennzeichnet, dass** die Bodenwand (19) jeder Rinne (18) oberhalb der Bodenwand (16) des Hohlraums (15) liegt.
